# EUROPEAN PATENT SPECIFICATION

(11) **EP 2 067 518 B1**
(45) Date of publication and mention of the grant of the patent: **27.07.2011**
(21) Application number: 08021173.3
(22) Date of filing: 05.12.2008
(51) Int. Cl.: B01D 53/94, B01J 35/04, F01N 3/022

(54) **Oxidation catalyst apparatus for purifying exhaust gas**
Oxidationskatalysatorvorrichtung zum Reinigen von Abgas
Appareil de catalyseur d'oxydation pour la purification des gaz d'échappement

(30) Priority: 06.12.2007 JP 2007316338
(43) Date of publication of application: 10.06.2009
(73) Proprietor: Honda Motor Co., Ltd., Minato-ku Tokyo 107-8556 (JP)
(72) Inventor: Tanaami, Kiyoshi, Wako-shi Saitama 351-0193 (JP); Isogai, Yuji, Wako-shi Saitama 351-0193 (JP)
(74) Representative: Prechtel, Jörg

(56) References cited:
- EP-A- 1 415 701
- EP-A- 1 723 998
- EP-A- 1 842 591
- EP-A- 1 852 184
- DE-A1- 4 316 508
- US-A1- 2004 191 133

## Description

### BACKGROUND OF THE INVENTION

### Field of the Invention

The present invention relates to an oxidation catalyst apparatus for purifying an exhaust gas by oxidizing and purifying particulate matter contained in the exhaust gas of an internal combustion engine using a catalyst comprising a composite metal oxide.

### Description of the Related Art

Conventionally, oxidation catalyst apparatuses for purifying an exhaust gas using a catalyst comprising a perovskite type composite metal oxide for oxidizing and purifying particulate matter and/or hydrocarbons contained in the exhaust gas of an internal combustion engine are known.

As a perovskite type composite metal oxide for use in the catalyst, for example, composite metal oxides represented by general formula AB₁₋ₓCₓO₃, wherein A is at least one kind of metal selected from a group consisting of La, Sr, Ce, Ba and Ca and B is at least one kind of metal selected from a group consisting of Co, Fe, Ni, Cr, Mn and Mg, and C is Pt or Pd are known (see Japanese Patent Laid-Open No. 07-116519).

In addition, as a perovskite type composite metal oxide for use in the catalyst, for example, composite metal oxides represented by general formula CeₓM₁₋ₓZrO₃, wherein M is at least one kind of metal selected from a group consisting of La, Sm, Nd, Gd, Sc and Y and 0.1 ≤ x ≤ 20 are known (see Japanese Patent Laid-Open No. 2003-334443).

The catalyst consisting of the perovskite type composite metal oxide is, for example, supported on the surface of a porous filter and used as an oxidation catalyst apparatus for purifying an exhaust gas (see Japanese Patent Laid-Open No. 07-116519).

EP-A-1852184 discloses a ceramic honeycomb structural body that is used to carry a catalyst for the removal of harmful gases such as HC, NOx, and the like discharged from internal combustion engines. The ceramic honeycomb structural body comprises a porous ceramic member having pores as a gas path through a partition wall. The catalyst is applied onto the surface of the partition walls, wherein the catalyst component is perovskite oxide.

EP-A-1415701 relates to a support for a catalyst for purifying components contained in exhaust gas. A composite metal oxide is coated onto the pore inner surface of a porous catalyst base material, wherein the metal oxide support layer has fine pores with an average pore diameter controlled to 10 nm or more.

EP-A-1842591 discloses a catalyst converter comprising a catalyst coating layer which is coated on the surface of partition wall of a honeycomb structural body. The honeycomb structural body of this converter is porous. US 2004/191133 A1 discloses the use of oxides of cerium and/or zirconium as an oxidation catalyst for purifying particulate. The catalyst is supported on the inner wall of the pores of the partition walls of a porous ceramic honeycomb structure.

EP-A-1723998 provides a filter catalyst comprising a catalyst support substrate. Composite oxides are used as the loading layer forming the catalyst.

However, the conventional oxidation catalyst apparatus for purifying an exhaust gas having a perovskite type composite metal oxide catalyst supported therein has disadvantages that the temperature to oxidize the particulate matter may be too high.

### SUMMARY OF THE INVENTION

An object of the present invention is to overcome such disadvantages and to provide an oxidation catalyst apparatus for purifying an exhaust gas which enables to oxidize and purify particulate matter in the exhaust gas of an internal combustion engine at a lower temperature.

In order to attain the object, the oxidation catalyst apparatus for purifying an exhaust gas of the present invention is an oxidation catalyst apparatus for purifying an exhaust gas which apparatus oxidizes and purifies particulate matter in the exhaust gas of an internal combustion engine using a catalyst comprising a composite metal oxide, the apparatus comprising
a porous filter base material having a plurality of penetrating holes formed therethrough in an axis direction, the porous filter base material having a wall flow structure including a plurality of inflow cells in which exhaust gas inflow parts of the penetrating holes are opened whereas exhaust gas outflow parts of the penetrating holes are closed and a plurality of outflow cells in which exhaust gas inflow parts of the penetrating holes are closed whereas exhaust gas outflow parts of the penetrating holes are opened, the inflow cells and the outflow cells being disposed alternately to allow boundary parts of respective cells to be cell partition walls; and
a porous catalyst layer characterized in that the porous catalyst layer comprises a porous composite metal oxide represented by the general formula Y₁₋ₓAgₓMn_{1-y}Ru_{y}O₃, wherein 0.01 ≤ x ≤ 0.15 and 0.005 ≤ y ≤ 0.2, supported on a surface on at least the inflow cell side of the cell partition wall, and
the porous catalyst layer has fine pores having a diameter in the range of 0.01 to 5 µm, and
the porous filter base material and the porous catalyst layer have a porosity of 35 to 70% as a whole.

According to the oxidation catalyst apparatus for purifying an exhaust gas of the present invention, the exhaust gas of the internal combustion engine is introduced from the exhaust gas inflow part of the inflow cell into the inflow cell. Since the inflow cell is closed at the exhaust gas outflow part, the exhaust gas introduced into the inflow cell passes through the fine pores of the porous catalyst layer supported on the surface of the cell partition wall and pores of the cell partition wall of the porous filter base material into the outflow cell. When the exhaust gas passes through the fine pores of the porous catalyst layer, the particulate matter in the exhaust gas contacts with the surface of the fine pores, and it is combusted and removed by the action of the catalyst of the porous catalyst layer. And since the exhaust gas inflow part is closed and the exhaust gas outflow part is opened in the outflow cell, the exhaust gas which moves to the outflow cell is discharged from the exhaust gas outflow part. Thus, the oxidation catalyst apparatus for purifying an exhaust gas can oxidize and purify the particulate matter in the exhaust gas of an internal combustion engine.

In the present invention, the diameter of the fine pores of the porous catalyst layer is in a range of 0.01 to 5 µm and the porosity of the porous filter base material and the porous catalyst layer is in the range of 35 to 70% as a whole, and therefore, temperature to oxidize the particulate matter in the exhaust gas of the internal combustion engine can be lowered.

Here, if the diameter of the fine pore size of the porous catalyst layer is less than 0.01 µm, there may be a case that pressure loss becomes large when the exhaust gas passes through the fine pores. On the other hand, if the diameter of the fine pore size of the porous catalyst layer is more than 5 µm, there may be a case that the particulate matter in the exhaust gas cannot sufficiently contact with the surface of the fine pores of the porous catalyst layer when the exhaust gas passes through the fine pores.

If the porosity of the porous filter base material and the porous catalyst layer is less than 35% as a whole, there may be a case that the temperature to oxidize the particulate matter in the exhaust gas of the internal combustion engine rises. On the other hand, if the porosity of the porous filter base material and the porous catalyst layer is more than 70% as a whole, there may be a case that the particulate matter in the exhaust gas cannot sufficiently contact with the surface of the fine pores of the porous catalyst layer when the exhaust gas passes through the fine pores.

In the oxidation catalyst apparatus for purifying an exhaust gas of the present invention, the porous catalyst layer preferably has a thickness in a range of 10 to 150 µm. According to such constitution, the particulate matter in the exhaust gas can be sufficiently combusted and removed by the action of the catalyst of the porous catalyst layer, when the exhaust gas passes through the fine pores of the porous catalyst layer.

Here, if the thickness of the porous catalyst layer is less than 10 µm, there may be a case that the particulate matter in the exhaust gas cannot sufficiently contact with the surface of the fine pores of the porous catalyst layer when the exhaust gas passes through the fine pores. On the other hand, if thickness of the porous catalyst layer is more than 150 µm, there may be a case that pressure loss becomes large when the exhaust gas passes through the fine pores of the porous catalyst layer.

It is also necessary that the porous catalyst layer is supported on the surface on at least the inflow cell side of the cell partition wall in the oxidation catalyst apparatus for purifying an exhaust gas of the present invention. The porous catalyst layer may be supported only on the surface on the inflow cell side of the cell partition wall, or the layer may be supported on both of the surface of the inflow cell side and the surface of the outflow cell side.

In addition, the porous catalyst layer comprises a composite metal oxide represented by general formula Y₁. ₓAgₓMn_{1-y}Ru_{y}O₃ wherein 0.01 ≤ x ≤ 0.15 and 0.005 ≤ y ≤ 0.2 in the oxidation catalyst apparatus for purifying an exhaust gas of the present invention.

The composite metal oxide is one in which, in a composite metal oxide represented by general formula YMnO₃, a part of the first metal Y is substituted with the third metal Ag and a part of the second metal Mn is substituted with the fourth metal Ru. The crystal structure Y₁₋ₓAgₓMn_{1-y}Ru_{y}O₃ by this substitution becomes a mixed crystal of hexagonal crystal and perovskite structures and has a high catalytic activity. Therefore, according to the present invention, the particulate matter in the exhaust gas can be sufficiently combusted and removed by the action of the catalyst of the porous catalyst layer, when the exhaust gas passes through the fine pores of the porous catalyst layer.

Here, when x is less than 0.01, there may be a case that the effect of enhancing the catalytic activity becomes insufficient. On the other hand, when x is more than 0.15, there may be a case that it becomes difficult to maintain a mixed crystal. In addition, when y is less than 0.005, there may be a case that the effect of enhancing the catalytic activity becomes insufficient. On the other hand, when y is more than 0.2, there may be a case that it becomes difficult to maintain a mixed crystal.

### BRIEF DESCRIPTION OF THE DRAWINGS

FIG. 1 is a cross sectional view of an oxidation catalyst apparatus for purifying an exhaust gas of an embodiment of the present invention;
FIG. 2 is a graph showing the combustion temperature of particulate matter by the oxidation catalyst apparatus for purifying an exhaust gas of Examples 1 to 11 and Comparative Example;
FIG. 3 is a graph showing the pressure loss by the oxidation catalyst apparatus for purifying an exhaust gas of Example 1 and Comparative Example;
FIG. 4 is a sectional image of the oxidation catalyst apparatus for purifying an exhaust gas of Example 1;
FIG. 5 is a graph showing the diameter of the pores of the porous filter base material and the diameter of the fine pores of the porous catalyst layer of the oxidation catalyst apparatus for purifying an exhaust gas of Example 1 and Comparative Example;
FIG. 6 is a graph showing the porosity of the porous filter base material and the porous catalyst layer as a whole of the oxidation catalyst apparatus for purifying an exhaust gas of Examples 1 to 11 and Comparative Example;
FIG. 7 is a graph showing the pressure loss by the oxidation catalyst apparatus for purifying an exhaust gas of Example 2 and Comparative Example;
FIG. 8 is a sectional image of the oxidation catalyst apparatus for purifying an exhaust gas of Example 2;
FIG. 9 is a graph showing the diameter of the pores of the porous filter base material and the diameter of the fine pores of the porous catalyst layer of the oxidation catalyst apparatus for purifying an exhaust gas of Example 2 and Comparative Example;
FIG. 10 is a graph showing the pressure loss by the oxidation catalyst apparatus for purifying an exhaust gas of Example 3 and Comparative Example;
FIG. 11 is a sectional image of the oxidation catalyst apparatus for purifying an exhaust gas of Example 3;
FIG. 12 is a graph showing the diameter of the pores of the porous filter base material and the diameter of the fine pores of the porous catalyst layer of the oxidation catalyst apparatus for purifying an exhaust gas of Example 3 and Comparative Example;
FIG. 13 is a graph showing the pressure loss by the oxidation catalyst apparatus for purifying an exhaust gas of Example 4 and Comparative Example;
FIG. 14 is a sectional image of the oxidation catalyst apparatus for purifying an exhaust gas of Example 4;
FIG. 15 is a graph showing diameter of the pores of the porous filter base material and the diameter of the fine pores of the porous catalyst layer of the oxidation catalyst apparatus for purifying an exhaust gas of Example 4 and Comparative Example;
FIG. 16 is a graph showing the pressure loss by the oxidation catalyst apparatus for purifying an exhaust gas of Example 5 and Comparative Example;
FIG. 17 is a sectional image of the oxidation catalyst apparatus for purifying an exhaust gas of Example 5;
FIG. 18 is a graph showing the diameter of the pores of the porous filter base material and the diameter of the fine pores of the porous catalyst layer of the oxidation catalyst apparatus for purifying an exhaust gas of Example 5 and Comparative Example;
FIG. 19 is a graph showing the pressure loss by the oxidation catalyst apparatus for purifying an exhaust gas of Example 6 and Comparative Example;
FIG. 20 is a sectional image of the oxidation catalyst apparatus for purifying an exhaust gas of Example 6;
FIG. 21 is a graph showing the diameter of the pores of the porous filter base material and the diameter of the fine pores of the porous catalyst layer of the oxidation catalyst apparatus for purifying an exhaust gas of Example 6 and Comparative Example;
FIG. 22 is a graph showing the pressure loss by the oxidation catalyst apparatus for purifying an exhaust gas of Example 7 and Comparative Example;
FIG. 23 is a sectional image of the oxidation catalyst apparatus for purifying an exhaust gas of Example 7;
FIG. 24 is a graph showing the diameter of the pores of the porous filter base material and the diameter of the fine pores of the porous catalyst layer of the oxidation catalyst apparatus for purifying an exhaust gas of Example 7 and Comparative Example;
FIG. 25 is a graph showing the pressure loss by the oxidation catalyst apparatus for purifying an exhaust gas of Example 8 and Comparative Example;
FIG. 26 is a sectional image of the oxidation catalyst apparatus for purifying an exhaust gas of Example 8;
FIG. 27 is a graph showing the diameter of the pores of the porous filter base material and the diameter of the fine pores of the porous catalyst layer of the oxidation catalyst apparatus for purifying an exhaust gas of Example 8 and Comparative Example;
FIG. 28 is a graph showing the pressure loss by the oxidation catalyst apparatus for purifying an exhaust gas of Example 9 and Comparative Example;
FIG. 29 is a sectional image of the oxidation catalyst apparatus for purifying an exhaust gas of Example 9;
FIG. 30 is a graph showing the diameter of the pores of the porous filter base material and the diameter of the fine pores of the porous catalyst layer of the oxidation catalyst apparatus for purifying an exhaust gas of Example 9 and Comparative Example;
FIG. 31 is a graph showing the pressure loss by the oxidation catalyst apparatus for purifying an exhaust gas of Example 10 and Comparative Example;
FIG. 32 is a sectional image of the oxidation catalyst apparatus for purifying an exhaust gas of Example 10;
FIG. 33 is a graph showing the diameter of the pores of the porous filter base material and the diameter of the fine pores of the porous catalyst layer of the oxidation catalyst apparatus for purifying an exhaust gas of Example 10 and Comparative Example;
FIG. 34 is a graph showing the pressure loss by the oxidation catalyst apparatus for purifying an exhaust gas of Example 11 and Comparative Example;
FIG. 35 is a sectional image of the oxidation catalyst apparatus for purifying an exhaust gas of Example 11;
FIG. 36 is a graph showing the diameter of the pores of the porous filter base material and the diameter of the fine pores of the porous catalyst layer of the oxidation catalyst apparatus for purifying an exhaust gas of Example 11 and Comparative Example; and
FIG. 37 is a sectional image of the oxidation catalyst apparatus for purifying an exhaust gas of the Comparative Example.

### DETAILED DESCRIPTION OF THE PREFERRED EMBODIMENTS

Next, embodiments of the present invention will be described in more detail by referring to attached drawings.

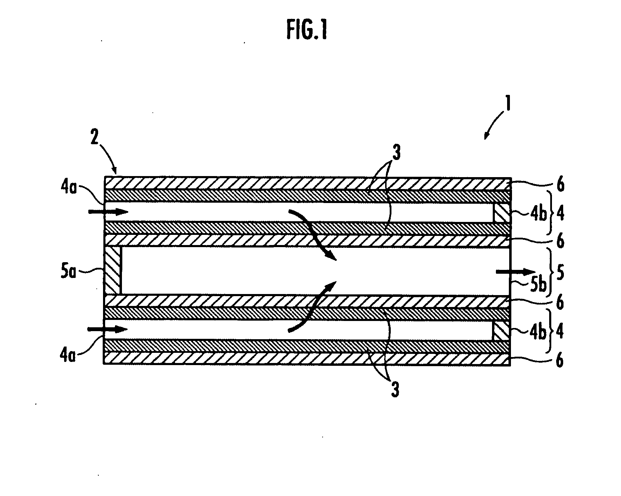

The oxidation catalyst apparatus 1 for purifying an exhaust gas of an embodiment of the present invention shown in FIG. 1 comprises a porous filter base material 2 having a wall flow structure and a porous catalyst layer 3 supported on the porous filter base material 2 and the apparatus oxidizes and purifies particulate matter contained in the exhaust gas by passing the exhaust gas of the internal combustion engine therethrough.

The porous filter base material 2 comprises SiC porous body in an almost rectangular solid shape in which a plurality of penetrating holes running therethrough in the axis direction are disposed in a grid in cross-sectional view and the material has a plurality of inflow cells 4 and a plurality of outflow cells 5 which are formed of the penetrating holes. The porous filter base material 2 has a plurality of pores (not shown) having a diameter in a range of 1.0 to 200 µm with a porosity in a range of 35 to 50% itself. The inflow cell 4 has an opened exhaust gas inflow part 4a and a closed exhaust gas outflow part 4b. On the other hand, the outflow cell 5 has a closed exhaust gas inflow part 5a and an opened exhaust gas outflow part 5b. The inflow cells 4 and outflow cells 5 are alternately disposed so that they may form a checkerboard grid in cross-sectional view and constitute a wall flow structure having boundary parts of respective cells 4 and 5 as cell partition walls 6.

A porous catalyst layer 3 comprising a composite metal oxide represented by general formula Y₁₋ₓAgₓMn_{1-y}Ru_{y}O₃ and 0.01 ≤ x ≤ 0.15 and 0.005 ≤ y ≤ 0.2 is supported on the surface on the inflow cell 4 side of cell partition wall 6. The porous catalyst layer 3 has fine pores (not shown) having a diameter in a range of 0.01 to 5 µm and a thickness in a range of 10 to 150 µm. The total porosity of the porous filter base material 2 and the porous catalyst layer 3 is in a range of 35 to 70% as a whole. In addition, although not shown, a controlling member comprising a metal which controls outflow of the exhaust gas is provided in the circumference part of cell partition wall 6 of the most outer layer.

In the oxidation catalyst apparatus 1 for purifying an exhaust gas of the present embodiment, the porous catalyst layer 3 is supported only on the surface on the side of the inflow cell 4 of cell partition wall 6, but the layer 3 may be supported on both the surfaces on the inflow cell 4 side and on the outflow cell 5 side. A material comprising SiC porous body is used as a porous filter base material 2 but a material comprising Si-SiC porous body may be also used.

The oxidation catalyst apparatus 1 for purifying an exhaust gas consisting of the constitution can be produced, for example, as follows. At first, a mixture consisting of yttrium nitrate, silver nitrate, manganese nitrate and ruthenium nitrate is subjected to the first burning at a temperature in a range of 200 to 400°C for a period in a range of 1 to 10 hours. Then the resulted mixture and a sol consisting of water and zirconia as a binder were mixed and crushed to prepare a slurry.

Then, a SiC porous body in which a plurality of penetrating holes running therethrough in the axis direction are disposed in a grid in cross-sectional view is prepared. As a SiC porous body, for example, SD031 (product name) produced by Ibiden Co., Ltd. shown in Table 1 can be used. Then, one end parts of the penetrating holes of the SiC porous body are alternately closed with a ceramic adhesive mainly composed of silica (that is, in a kind of a checkerboard grid in a cross-sectional view) to form inflow cells 5. Then, the slurry is poured into the SiC porous body from the side where closed ends are present and thereby, the slurry is passed through a plurality of the penetrating holes with no closed ends (that is, cells other than the inflow cells 5). Subsequently, the excessive slurry is removed from the SiC porous body.

**[Table 1]**

| | |
|---|---|
| Dimensions (mm) | 36x36x50 |
| Apparent volume (mm³) | 65000 |
| Diameter of pores (µm) | 11 |
| Porosity (%) | 42 |

Then, the SiC porous body is subjected to the second burning at a temperature in a range of 800 to 1000°C for a period in a range of 1 to 10 hours to form a porous catalyst layer 3 consisting of a composite metal oxide Y₁₋ₓAgₓMn_{1-y}Ru_{y}O₃ (provided that 0.01 ≤ x s 0.15 and 0.005 ≤ y s 0.2) on the surface of each of the cell partition walls 6 of the cells other than the inflow cells 5. Here, the porous catalyst layer 3 is formed so as to have fine pores (not shown) having a diameter in a range of 0.01 to 5 µm and a thickness in a range of 10 to 150 µm as a result of the second burning at the temperature and hours of above-mentioned range. Next, the end parts of the cells other than the inflow cells 5 on the opposite side to the side where the end parts of the cells are closed are alternately closed with a ceramic adhesive mainly composed of silica to form outflow cells 4. The oxidation catalyst apparatus 1 for purifying an exhaust gas produced in this way is formed so that the total porosity of the porous filter base material 2 and the porous catalyst layer 3 may be formed in a range of 35 to 70% as a whole.

Next, the operation of the oxidation catalyst apparatus 1 for purifying an exhaust gas of the present embodiment is described by referring to FIG. 1. At first, the oxidation catalyst apparatus 1 for purifying an exhaust gas is placed so that the exhaust gas inflow parts 4a and 5a of the inflow cell 4 and outflow cell 5 may be positioned upstream in the exhaust gas flow path of the internal combustion engine. The exhaust gas is introduced from the exhaust gas inflow part 4a of the inflow cell 4 into the inflow cell 4. At this time, the exhaust gas is not introduced into the outflow cell 5 since the exhaust gas inflow part 5a of the outflow cell 5 is closed.

Subsequently, the exhaust gas introduced into the inflow cell 4 moves into the outflow cell 5 through the pores of the porous catalyst layer 3 supported on the surface of the cell partition wall 6 and pores of the cell partition wall 6 of the porous filter base material 2 since the exhaust gas outflow part 4b of the inflow cell 4 is closed. When the exhaust gas flows through the fine pores of the porous catalyst layer 3, particulate matter in the exhaust gas contacts with the surface of the fine pores, and it is combusted and removed by the action of the catalyst of the porous catalyst layer 3.

And the exhaust gas which has moved into the outflow cell 5 is discharged from the exhaust gas outflow part 5b since the exhaust gas inflow part 5a of the outflow cell 5 is closed whereas the exhaust gas outflow part 5b is open. Thus, the oxidation catalyst apparatus 1 for purifying an exhaust gas of the present embodiment can oxidize and purify the particulate matter in the exhaust gas of an internal combustion engine.

Since the diameter of the fine pores of the porous catalyst layer 3 is in a range of 0.01 to 5 µm, and the total porosity of the porous filter base material 2 and the porous catalyst layer 3 as a whole is in a range of 35 to 70% in the oxidation catalyst apparatus 1 for purifying an exhaust gas of the present embodiment, it is enabled to lower the temperature to oxidize the particulate matter in the exhaust gas of an internal combustion engine than one having a porosity less than 35%.

Since the porous catalyst layer 3 has a thickness in a range of 10 to 150 µm in the oxidation catalyst apparatus 1 for purifying an exhaust gas of the present embodiment, it is enable to sufficiently oxidize and purify the particulate matter in the exhaust gas by the action of the catalyst of the porous catalyst layer 3 when the exhaust gas passes through the fine pores of the porous catalyst layer 3.

The porous catalyst layer 3 comprises a composite metal oxide represented by general formula Y₁₋ₓAgₓMn_{1-y}Ru_{y}O₃ wherein 0.01 ≤ x s 0.15 and 0.005 ≤ y ≤ 0.2 in the oxidation catalyst apparatus 1 for purifying an exhaust gas of the present embodiment. The composite metal oxide is one in which, in a composite metal oxide represented by general formula YMnO₃, the first metal Y is substituted with the third metal Ag and the second metal Mn is substituted with the fourth metal Ru. The crystal structure Y₁₋ₓAgₓMn_{1-y}Ru_{y}O₃ by this substitution becomes a mixed crystal of hexagonal crystal and perovskite structures and has a high catalytic activity. Therefore, the particulate matter in the exhaust gas can be sufficiently combusted and removed by the action of the catalyst of the porous catalyst layer 3 with the oxidation catalyst apparatus 1 for purifying an exhaust gas of the present embodiment, when the exhaust gas passes through the fine pores of the porous catalyst layer 3.

Examples of the present invention and Comparative Example are shown below.

### [Example 1]

In this Example, yttrium nitrate, silver nitrate, manganese nitrate, ruthenium nitrate, malic acid and water were prepared at first so that they were in a molar ratio of 0.95:0.05:0.95:0.05:6:40 and mixed in a mortar at a temperature of 25°C for 15 minutes, and after that, the first burning was performed at a temperature of 350°C for one hour. Then, the resulted product by the first burning, water and a commercial aqueous dispersion zirconia sol as a binder were weighed so that they were in a weight ratio of 10:100:10 and ground in a rotary ball mill at 100 rounds per minute for five hours to prepare a catalyst precursor slurry.

Then, a SiC porous body (product name SD031 produced by Ibiden Co., Ltd., with a dimension of 36 mmx36 mmx50 mm) in which a plurality of penetrating holes running therethrough in the axis direction are disposed in a grid in cross-sectional view was prepared, and one end parts of the penetrating hole of the SiC porous body were alternately closed with a ceramic adhesive mainly composed of silica (that is, in a kind of a checkerboard grid in a cross-sectional view) to form outflow cells 5. Then, the catalyst precursor slurry was poured into the SiC porous body from the side where the ends were closed and thereby, the slurry was allowed to flow within a plurality of the penetrating holes with no closed ends (that is, cells other than the inflow cells 5). Subsequently, the excessive slurry was removed from the SiC porous body.

Then, the SiC porous body was subjected to the second burning at a temperature of 850°C for one hour to form a porous catalyst layer 3 consisting of a composite metal oxide Y_{0.95}Ag_{0.05}Mn_{0.95}Ru_{0.05}O₃ on the surface of the penetrating holes with no closed ends so that the loading amount was 100 g/l L of apparent volume. Next, the end parts of the cells other than outflow cells 5 on the opposite side to the side where the end parts of the cells are closed were alternately closed with a ceramic adhesive mainly composed of silica to form inflow cells 4, and the oxidation catalyst apparatus 1 for purifying an exhaust gas was completed.

Then, catalytic performance evaluation test was performed on the oxidation catalyst apparatus 1 for purifying an exhaust gas of this embodiment as follows. At first, the oxidation catalyst apparatus 1 for purifying an exhaust gas was mounted on the discharging system of an engine bench on which a diesel engine of a displacement volume of 2,400 cc was mounted. Then, the diesel engine was run for 20 minutes under an atmosphere gas containing particulate matter with the inflow temperature of the atmosphere gas to the oxidation catalyst apparatus 1 for purifying an exhaust gas being 180°C, the rotating speed of the engine being 1,500 rounds per minute, and the torque being 70 N/m and thereby 2 g per 1 L apparent volume of oxidation catalyst apparatus 1 for purifying an exhaust gas was collected.

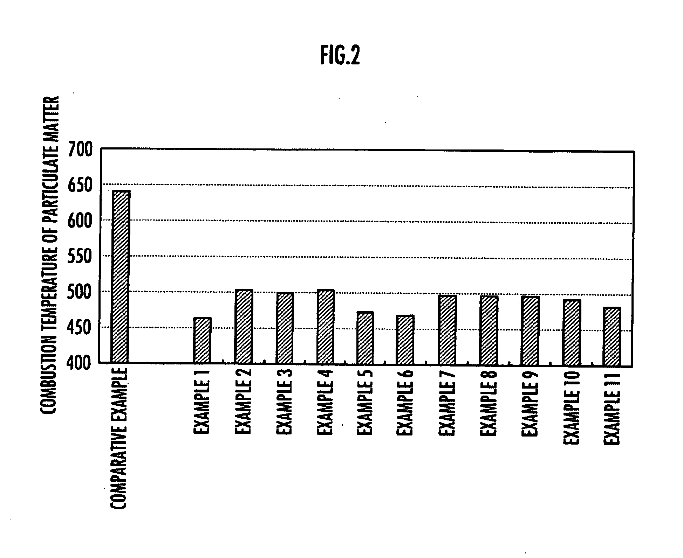

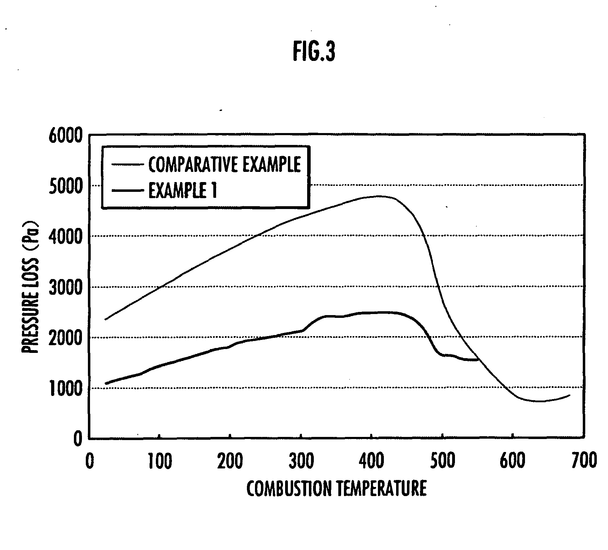

Then, the oxidation catalyst apparatus 1 for purifying an exhaust gas which collected particulate matter was taken out of the exhaust system and fixed in a silica tube which was placed in a circulation type heating device. Next, an atmosphere gas composed of oxygen and nitrogen of 10:90 in volume ratio was supplied from an end part (feed opening) of the silica tube at a space velocity of 20,000/hour, and while the gas was discharged from the other end part (discharge opening) of the silica tube, the oxidation catalyst apparatus 1 for purifying an exhaust gas was heated from room temperature to a temperature of 700°C at a rate of 3°C/min using a tubular muffle furnace of the circulation type heating device. The CO₂ concentration in the exhaust gas from the silica tube was measured with a mass spectrometer at this time, and the combustion temperature of the particulate matter was determined from the peak of CO₂ concentration. The results are shown in FIG. 2. In addition, the pressure loss of oxidation catalyst apparatus 1 for purifying an exhaust gas was also determined by measuring the difference in pressure between the feed opening of the silica tube and discharge opening of the silica tube. The results are shown in FIG. 3.

Then two 5 mm cubes were prepared by cutting the oxidation catalyst apparatus 1 for purifying an exhaust gas of this embodiment with a diamond cutter.

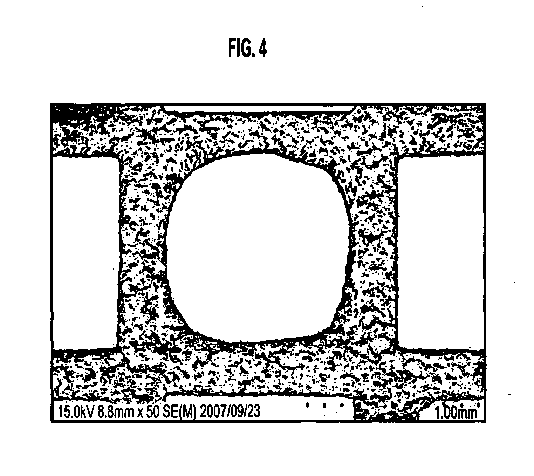

A sectional image of the first cube of the oxidation catalyst apparatus 1 for purifying an exhaust gas was photographed using a transmission electron microscope and the thickness of the porous catalyst layer 3 was measured. The sectional image of the oxidation catalyst apparatus 1 for purifying an exhaust gas is shown in FIG. 4. The thickness of the porous catalyst layer 3 was measured to be 60 µm from FIG. 4.

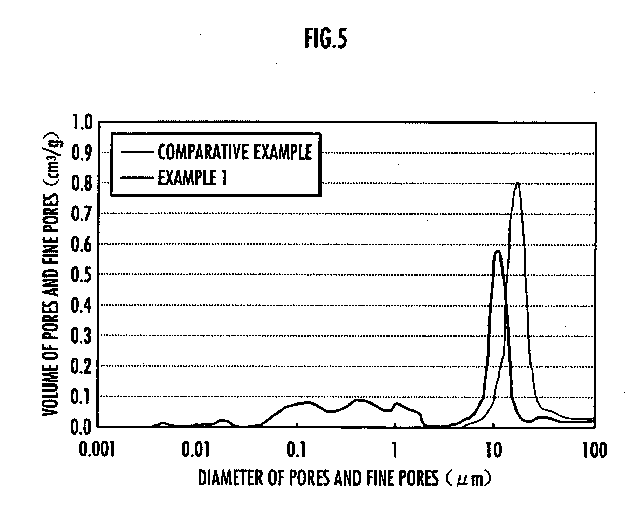

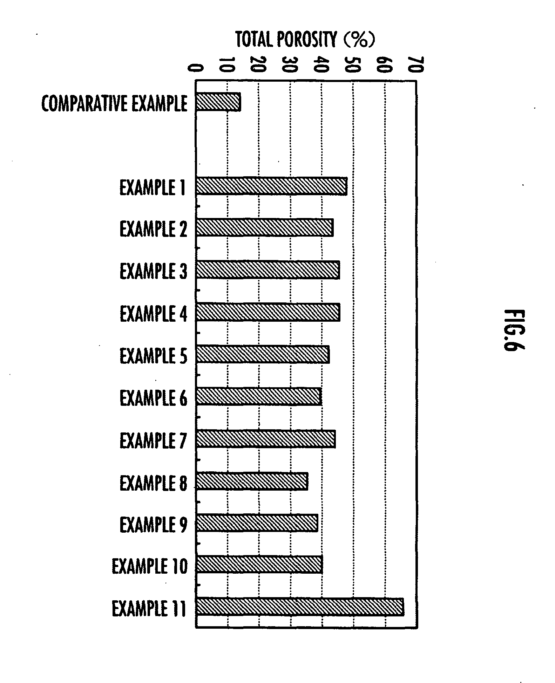

Then, the second cube of the oxidation catalyst apparatus 1 for purifying an exhaust gas was subjected to automatic mercury porosimetry and thereby the diameter of the pores of the porous filter base material layer 2 and the diameter of the fine pores of the porous catalyst layer 3 and the total porosity of the porous filter base material layer 2 and the porous catalyst layer 3 as a whole were measured. The results are shown in FIG. 5 and FIG. 6. The diameter of the fine pores was measured to be a range of 0.01 to 2.0 µm from FIG. 5.

### [Example 2]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:3:40.

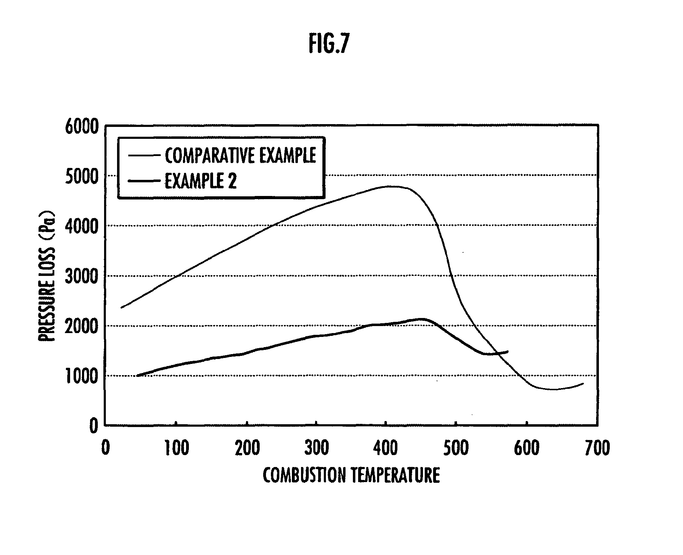

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 7.

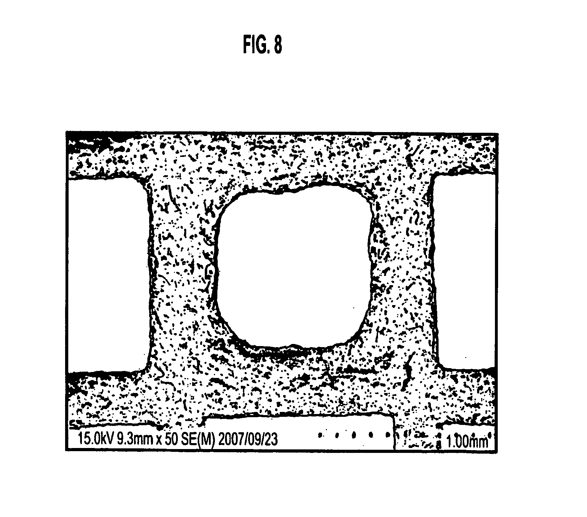

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 8. The thickness of the porous catalyst layer 3 was measured to be 120 µm from FIG. 8.

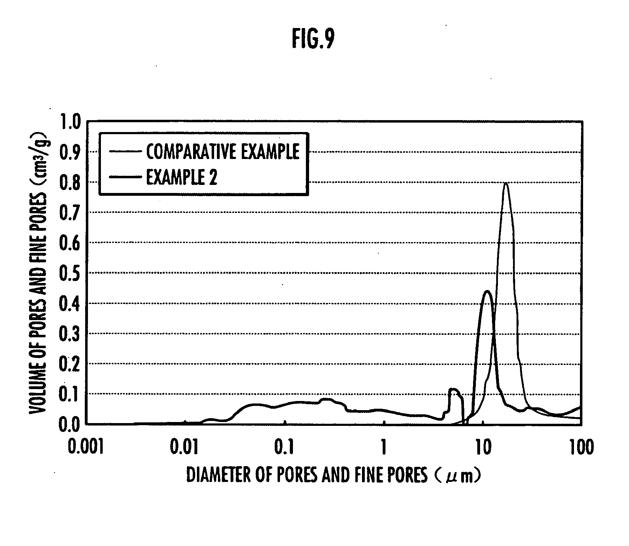

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 9 and FIG. 6. The diameter of the fine pores was measured to be a range of 0.02 to 3.0 µm from FIG. 9.

### [Example 3]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:12:40.

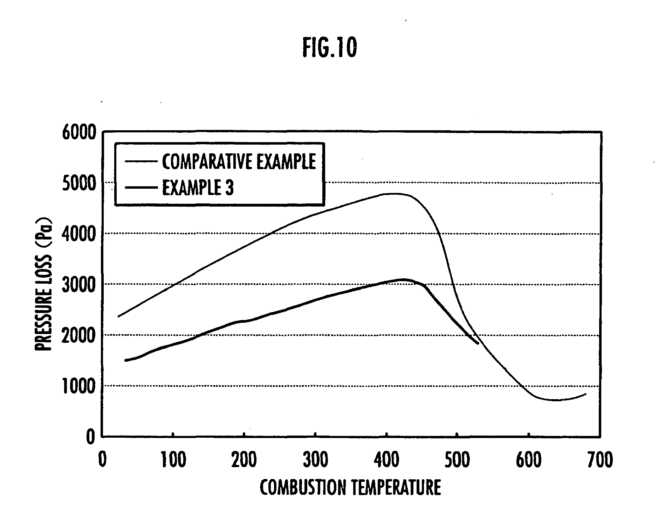

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 10.

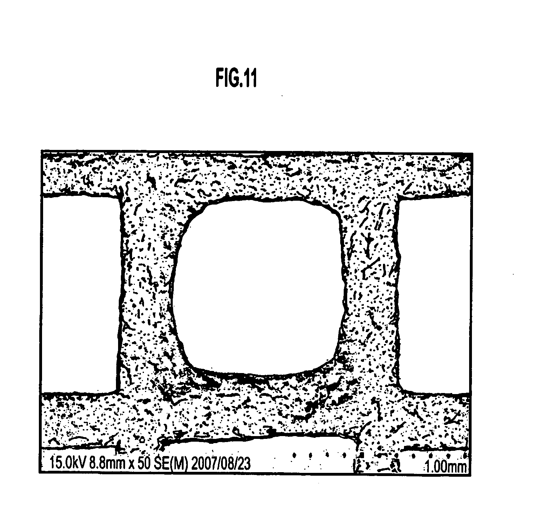

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 11. The thickness of the porous catalyst layer 3 was measured to be 120 µm from FIG. 11.

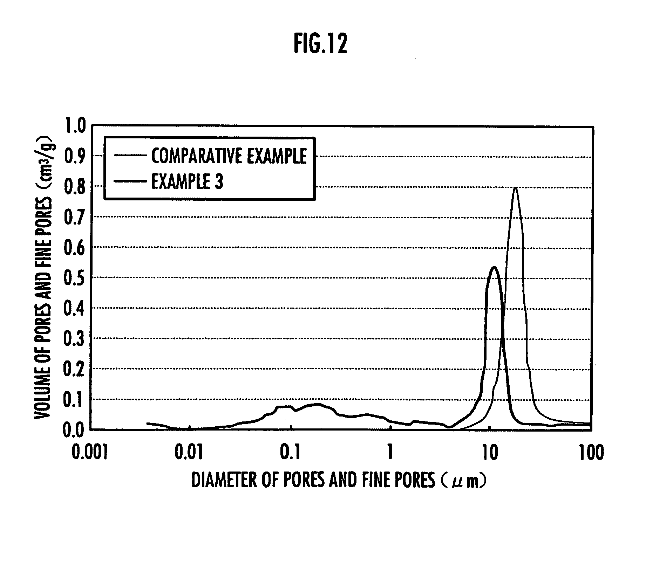

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 12 and FIG. 6. The diameter of the fine pores was measured to be a range of 0.02 to 4.0 µm from FIG. 12.

### [Example 4]

In this Example, the oxidation catalyst apparatus 1 for purifying an exhaust gas having a porous catalyst layer 3 consisting of a composite metal oxide Y_{0.95}Ag_{0.05}Mn_{0.09}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:18:40.

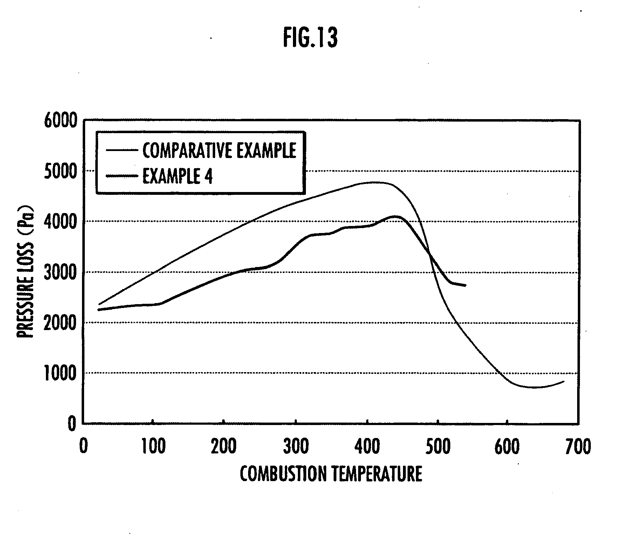

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 13.

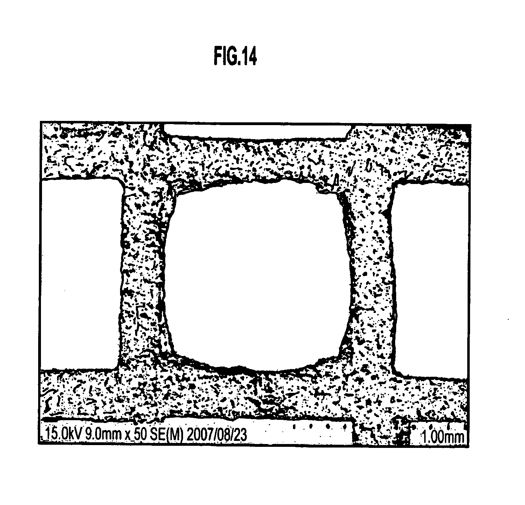

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 14. The thickness of the porous catalyst layer 3 was measured to be 25 µm from FIG. 14.

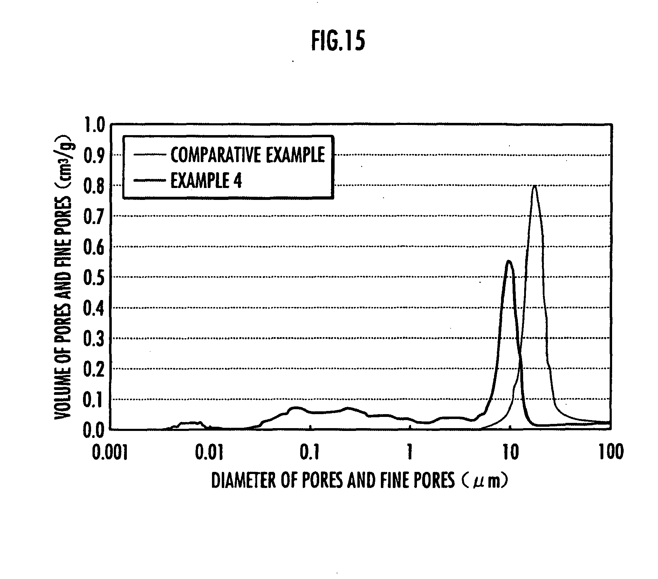

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 15 and FIG. 6. The diameter of the fine pores was measured to be a range of 0.01 to 5.0 µm from FIG. 15.

### [Example 5]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, citric acid and water were prepared so that they were in a molar ratio of 0.95:0.05:0.95:0.05:6:40.

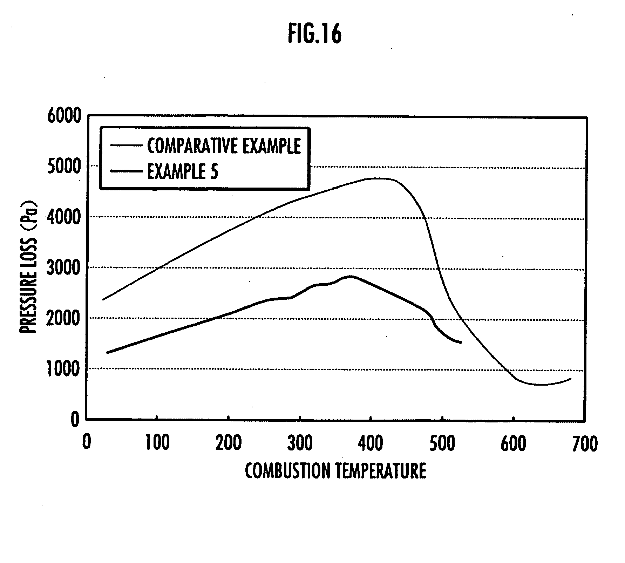

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 16.

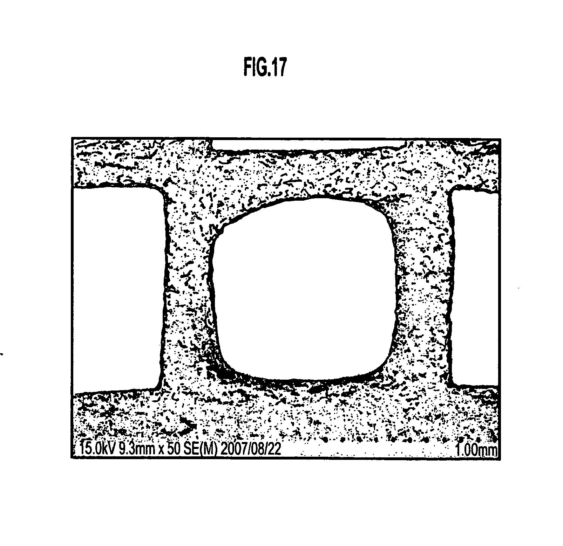

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 17. The thickness of the porous catalyst layer 3 was measured to be 50 µm from FIG. 17.

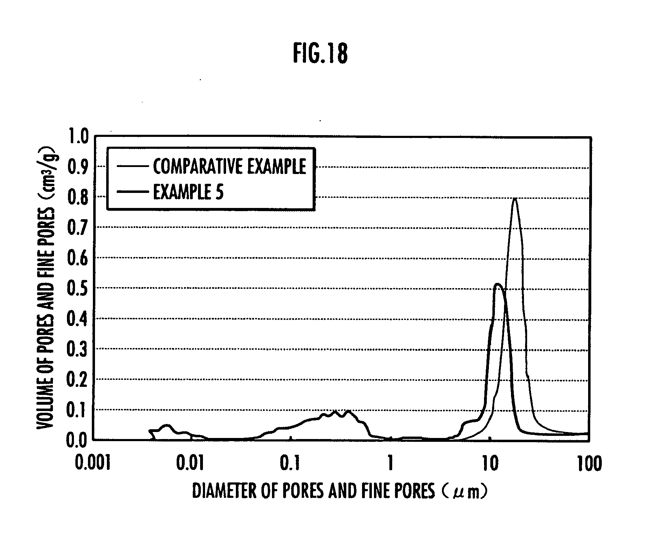

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 18 and FIG. 6. The diameter of the fine pores was measured to be a range of 0.03 to 1.5 µm from FIG. 18.

### [Example 6]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, urea and water were prepared so that they were in a molar ratio of 0.95:0.05:0.95:0.05:6:40.

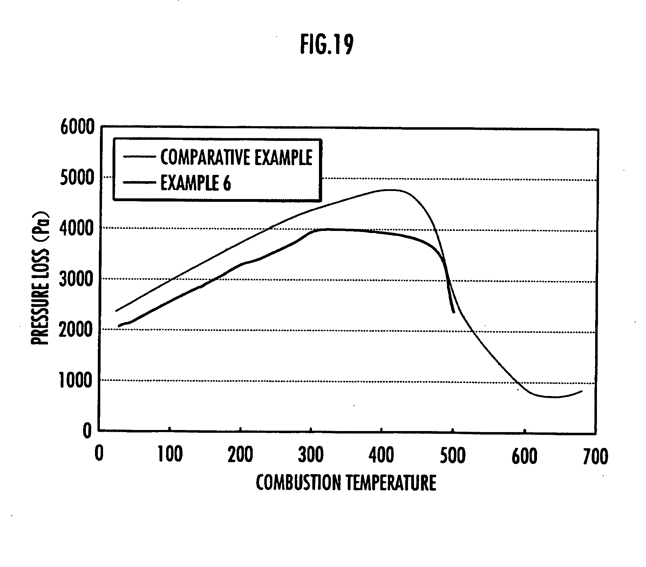

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 19.

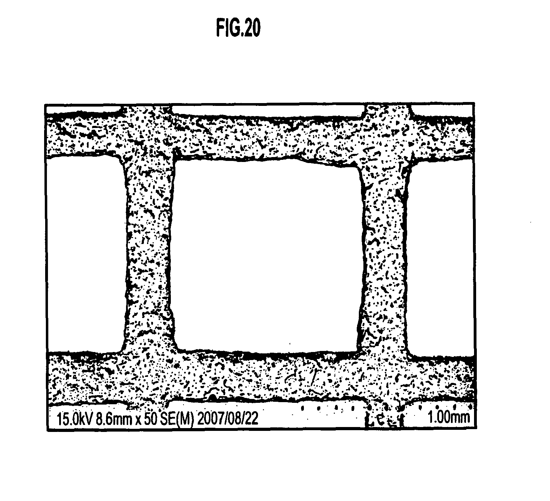

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 20. The thickness of the porous catalyst layer 3 was measured to be 20 µm from FIG. 20.

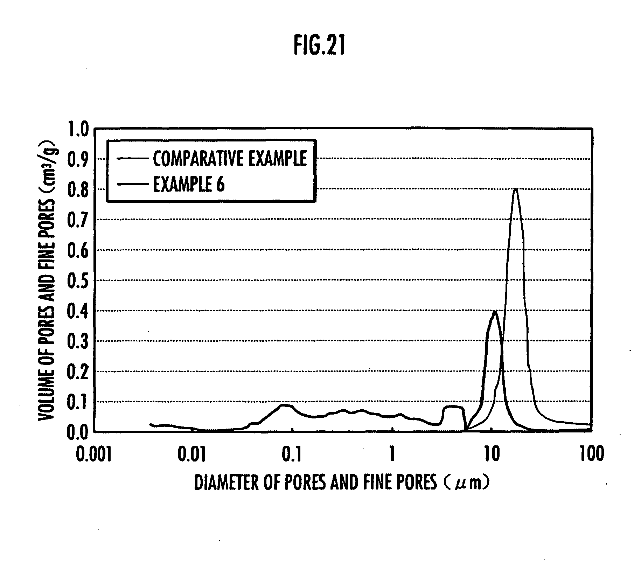

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 21 and FIG. 6. The diameter of the fine pores was measured to be a range of 0.03 to 5.0 µm from FIG. 21.

### [Example 7]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, glutaminic acid and water were prepared so that they were in a molar ratio of 0.95:0.05:0.95:0.05:6:40.

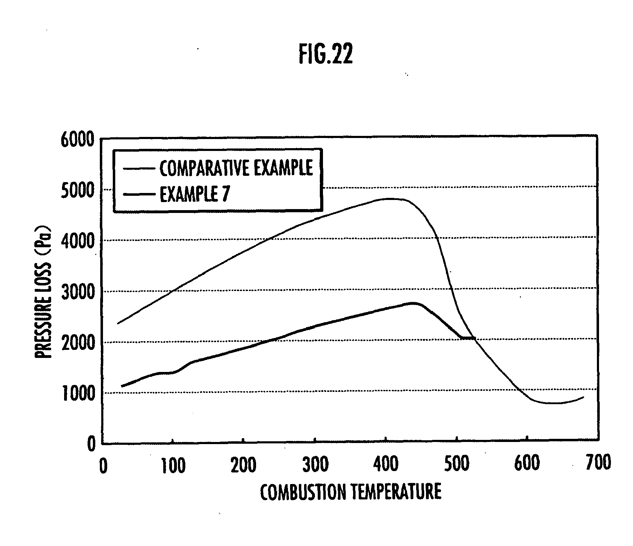

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 22.

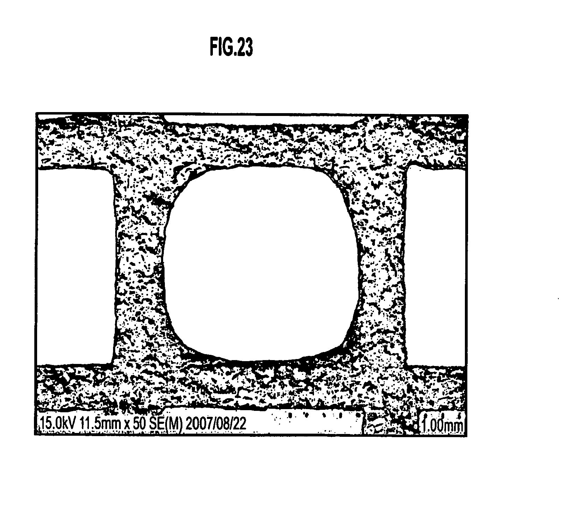

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 23. The thickness of the porous catalyst layer 3 was measured to be 30 µm from FIG. 23.

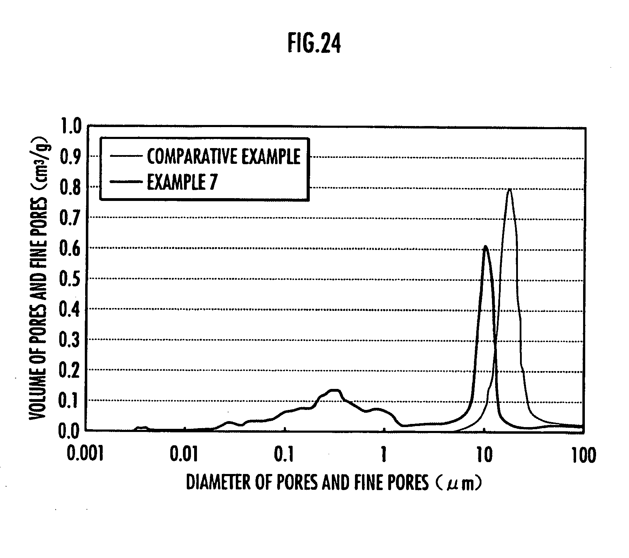

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 24 and FIG. 6. The diameter of the fine pores was measured to be a range of 0.01 to 3.0 µm from FIG. 24.

### [Example 8]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 20 g per 1 L of apparent volume.

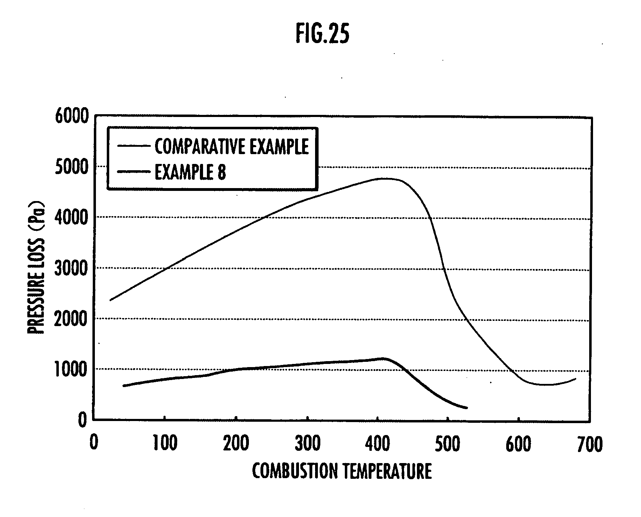

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 25.

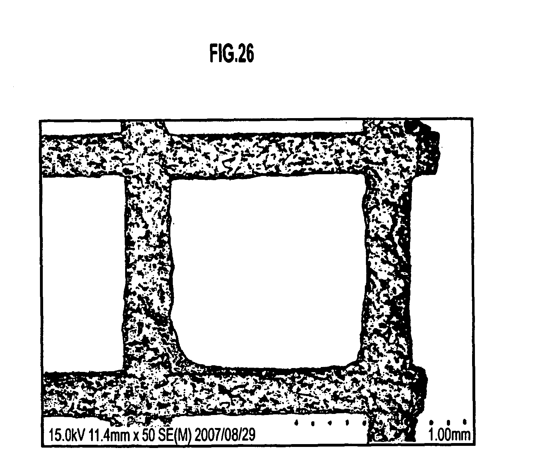

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 26. The thickness of the porous catalyst layer 3 was measured to be 25 µm from FIG. 26.

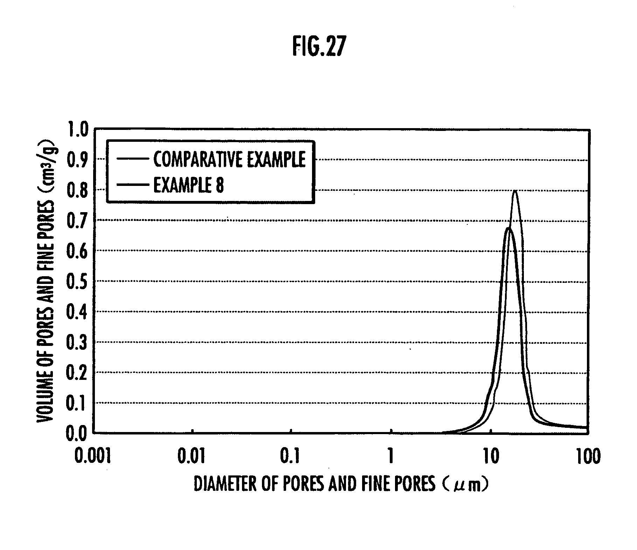

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 27 and FIG. 6. The diameter of the fine pores was measured to be a range of 0.01 to 5.0 µm from FIG. 27.

### [Example 9]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 40 g per 1 L of apparent volume.

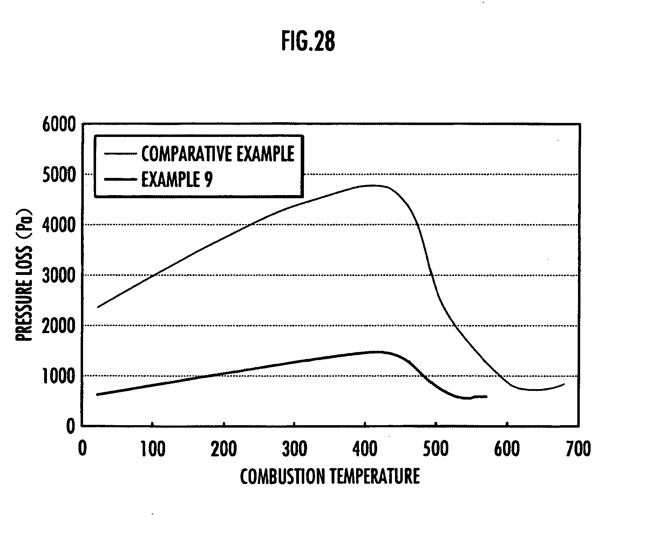

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 28.

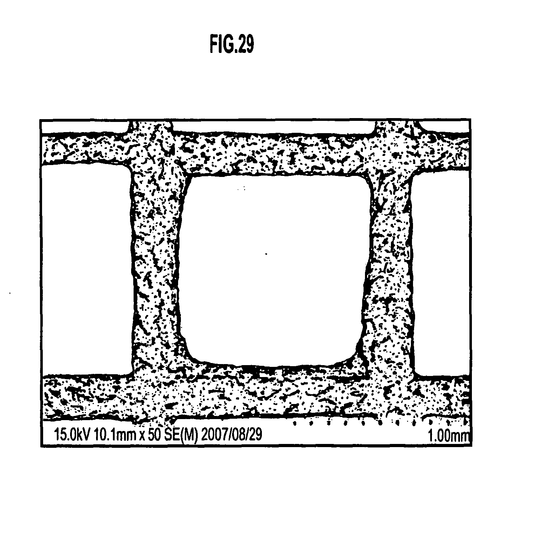

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 29. The thickness of the porous catalyst layer 3 was measured to be 75 µm from FIG. 29.

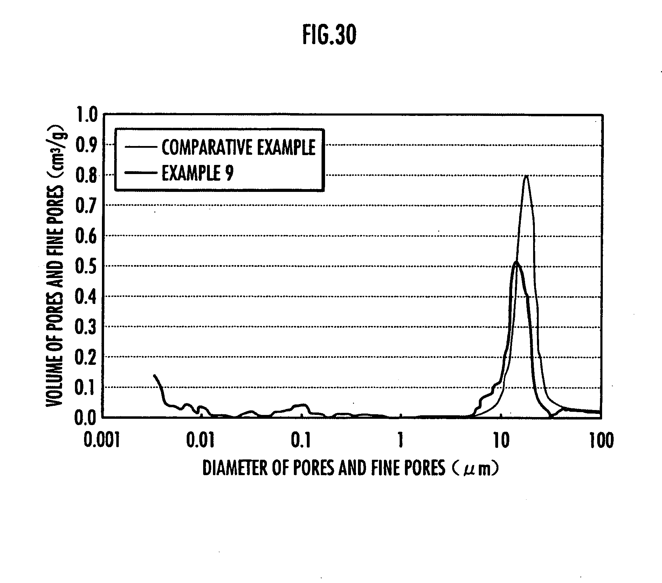

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 30 and FIG. 6. The diameter of the fine pores was measured to be a range of 0.01 to 5.0 µm from FIG. 30.

### [Example 10]

In this Example, the oxidation catalyst apparatus 1 for purifying an exhaust gas having a porous catalyst layer 3 consisting of a composite metal oxide Y_{0.95}Ag_{0.05}Mno_{0.95}Ru_{0.05}O₃ was formed totally in the same manner as in Example 1 except that the loading amount of the porous catalyst layer 3 was 80 g per 1 L of apparent volume.

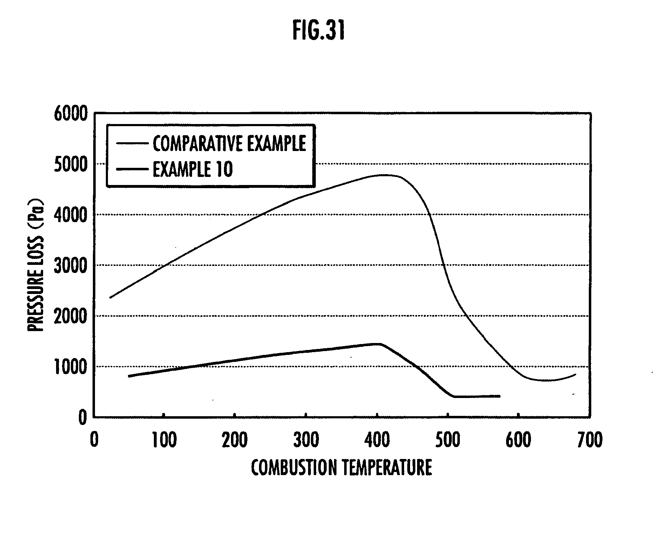

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 31.

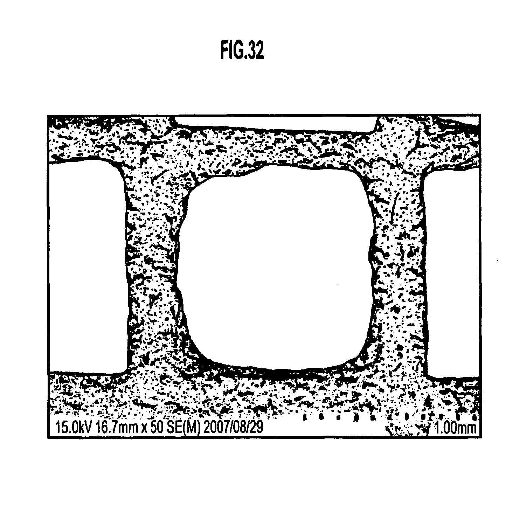

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 32. The thickness of the porous catalyst layer 3 was measured to be 70 µm from FIG. 32.

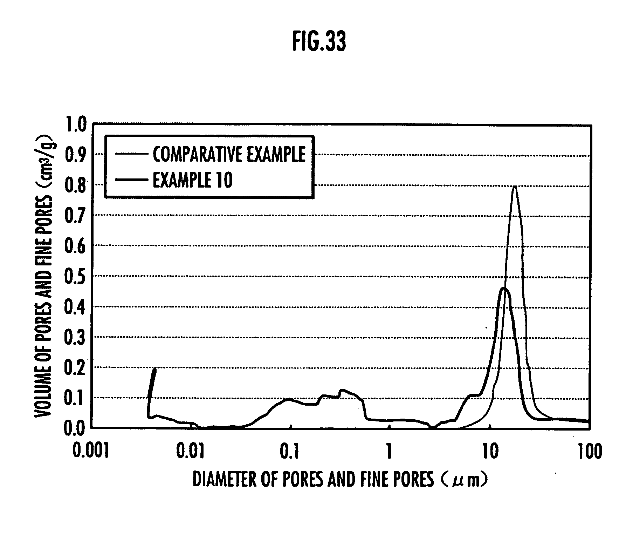

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 33 and FIG. 6. The diameter of the fine pores was measured to be a range of 0.04 to 2.0 µm from FIG. 33.

### [Example 11]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 150 g per 1 L of apparent volume. -

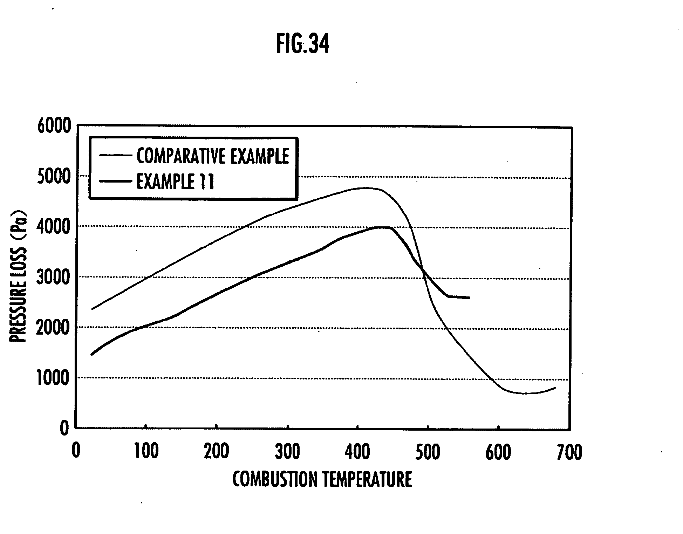

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 34.

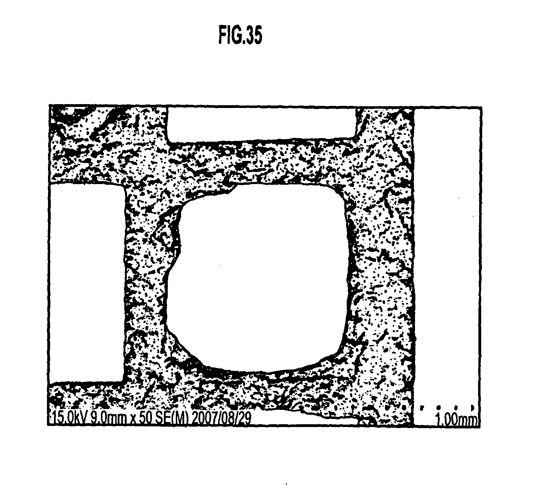

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 35. The thickness of the porous catalyst layer 3 was measured to be 80 µm from FIG. 35.

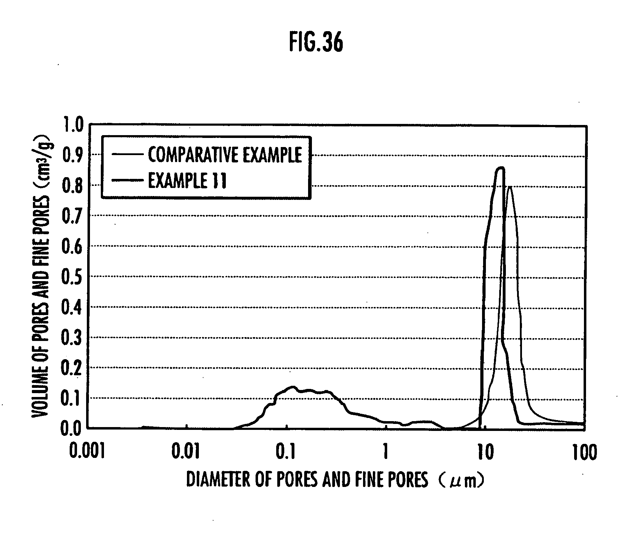

Then, the diameter of the pores of the porous filter base material layer 2 and the diameter of the fine pores of the porous catalyst layer 3 and the total porosity of the porous filter base material layer 2 and the porous catalyst layer 3 as a whole were measured for the oxidation catalyst apparatus 1 for purifying an exhaust gas obtained in this Example totally in the same manner as in Example 1. The results are shown in FIG. 36 and FIG. 6. The diameter of the fine pores was measured to be a range of 0.03 to 5.0 µm from FIG. 36.

### [Comparative Example 1]

In this Comparative Example, silver nitrate and ruthenium nitrate were not used at all and yttrium nitrate, manganese nitrate, malic acid and water were prepared at first so that they were in a molar ratio of 1:1:6:40 and mixed in a mortar at a temperature of 25°C for 15 minutes, and after that, the first burning was performed at a temperature of 350°C for one hour. Then, the resulted product by the first burning was mixed in a mortar at a temperature of 25°C for 15 minutes and after that, the second burning was performed for one hour at a temperature of 850°C.

Then, the resulted product by the second burning, water and a commercial aqueous dispersion zirconia sol as a binder were weighed so that they were in a weight ratio of 10:100:10 and ground in a rotary ball mill at 100 rounds per minute for five hours to prepare a catalyst precursor slurry.

Then, the catalyst precursor slurry was allowed to flow within a SiC porous body (product name SD031 produced by Ibiden Co., Ltd., with a dimension of 36 mmx36 mmx50 mm) in the same manner as in Examples, and the excessive slurry was removed from the SiC porous body.

Then, the SiC porous body was subjected to the third burning at a temperature of 600°C for one hour to form a porous catalyst layer consisting of a composite metal oxide YMnO₃ on the surface of the penetrating holes with no closed ends so that the loading amount was 40 g/l L of apparent volume. Then, inflow cells were formed in the same manner as in Examples. Thus an oxidation catalyst apparatus 1 for purifying an exhaust gas of Comparative Example was completed.

Then, the combustion temperature of particulate matter and the pressure loss of the oxidation catalyst apparatus for purifying an exhaust gas obtained in Comparative Example were determined totally in the same manner as in Example 1. The results are shown in FIGS. 2, 3, 7, 10, 13, 16, 19, 22, 25, 28, 31 and 34.

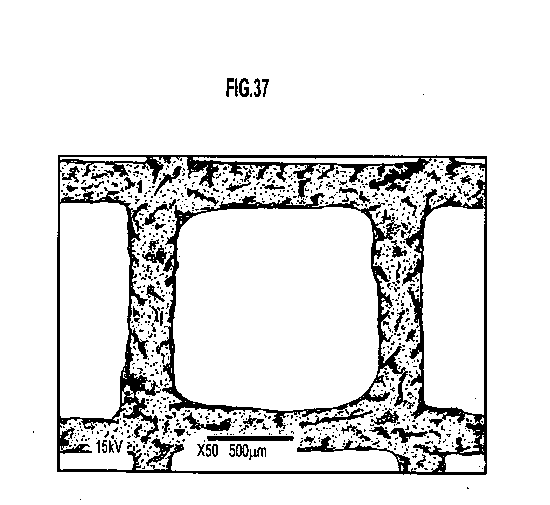

Then, a sectional image of the oxidation catalyst apparatus for purifying an exhaust gas obtained in this Comparative Example was photographed and the thickness of the porous catalyst layer 3 was measured totally in the same manner as in Example 1. The sectional image of the oxidation catalyst apparatus for purifying an exhaust gas is shown in FIG. 37. According to FIG. 37, the interface between the porous filter base material and the porous catalyst layer cannot be recognized and it is clear that no definite porous catalyst layer is formed.

Then, the diameter of the pores of the porous filter base material layer 2 and the total porosity of the porous filter base material layer 2 and the porous catalyst layer 3 as a whole were measured for the oxidation catalyst apparatus for purifying an exhaust gas obtained in this Comparative Example totally in the same manner as in Example 1. The results are shown in FIGS. 5, 9, 12, 15, 18, 21, 24, 27, 30, 33, 36 and FIG. 6.

It is clear from FIGS. 4, 8, 11, 14, 17, 20, 23, 26, 29, 32, 35, 37 that the diameter of the fine pores of the porous catalyst layer 2 is in a range of 0.01 to 5 µm in each of the oxidation catalyst apparatus 1 for purifying an exhaust gas of Examples 1 to 11 whereas no porous catalyst layer 2 is formed in the oxidation catalyst apparatus for purifying an exhaust gas of Comparative Example. In addition, it is clear from FIG. 6 that the total porosity of the porous filter base material layer 2 and the porous catalyst layer 3 as a whole is in a range of 30 to 70% in each of the oxidation catalyst apparatus 1 for purifying an exhaust gas of Examples 1 to 11 whereas the total porosity of the porous filter base material layer in the oxidation catalyst apparatus for purifying an exhaust gas of Comparative Example is less than 30%.

It is also clear from FIG. 2 that the particulate matter can be oxidized (combusted) at a lower temperature according to each of the oxidation catalyst apparatus 1 for purifying an exhaust gas of Examples 1 to 11 as compared with the oxidation catalyst apparatus for purifying an exhaust gas of Comparative Example comprising a composite metal oxide YMnO₃ in which the total porosity of the porous filter base material layer and the porous catalyst layer as a whole is less than 30%.

In addition, it is also clear from FIGS. 3, 7, 10, 13, 16, 19, 22, 25, 28, 31 and 34 that according to oxidation catalyst apparatus 1 for purifying an exhaust gas of Examples 1 to 11, the pressure loss is smaller at a temperature in a range of 0 to 500°C in all the Examples except for Example 4 and Example 11 as compared with the oxidation catalyst apparatus for purifying an exhaust gas of Comparative Example.

To provide an oxidation catalyst apparatus for purifying an exhaust gas which enables to oxidize and purify particulate matter in the exhaust gas of an internal combustion engine at a lower temperature. The oxidation catalyst apparatus 1 for purifying an exhaust gas comprises a porous filter base material 2 having a plurality of penetrating holes formed therethrough in an axis direction, the porous filter base material 2 having a wall flow structure including a plurality of inflow cells 4 in which exhaust gas inflow parts 4a of the penetrating holes are opened whereas exhaust gas outflow parts 4b of the penetrating holes are closed and a plurality of outflow cells 5 in which exhaust gas inflow parts 5a of the penetrating holes are closed whereas exhaust gas outflow parts 5b of the penetrating holes are opened, the inflow cells 4 and the outflow cells 5 being disposed alternately to allow boundary parts of respective cells 4 and 5 to be cell partition walls 6; and a porous catalyst layer 3 comprising a porous composite metal oxide supported on a surface on at least the inflow cell 4 side of the cell partition wall 6, wherein the porous catalyst layer 3 has fine pores having a diameter in the range of 0.01 to 5 µm, and the porous filter base material 2 and the porous catalyst layer 3 have a porosity of 35 to 70% as a whole.

## Claims

1. An oxidation catalyst apparatus for purifying an exhaust gas by oxidizing particulate matter in the exhaust gas of an internal combustion engine using a catalyst comprising a composite metal oxide, the apparatus comprising
a porous filter base material (2) having a plurality of penetrating holes formed therethrough in an axis direction, the porous filter base material (2) having a wall flow structure including a plurality of inflow cells (4) in which exhaust gas inflow parts (4a) of the penetrating holes are opened whereas exhaust gas outflow parts (4b) of the penetrating holes are closed and a plurality of outflow cells (5) in which exhaust gas inflow parts (5a) of the penetrating holes are closed whereas exhaust gas outflow parts (5b) of the penetrating holes are opened, and the inflow cells (4) and the outflow cells (5) being disposed alternately to allow boundary parts of respective cells to be cell partition walls (6); and
a porous catalyst layer (3)
**characterized in that**
the porous catalyst layer (3) comprises a porous composite metal oxide represented by the general formula Y₁₋ₓAgₓMn_{1-y}Ru_{y}O₃ wherein 0.01 ≤ x s 0.15 and 0.005 s y ≤ 0.2, supported on a surface on at least the inflow cell (4) side of the cell partition wall (6), and
the porous catalyst layer (3) has fine pores having a diameter in the range of 0.01 to 5 µm, and
the porous filter base material (2) and the porous catalyst layer (3) have a porosity of 35 to 70 % as a whole.

2. The oxidation catalyst apparatus for purifying an exhaust gas according to claim 1, wherein the porous catalyst layer (3) has fine pores having a diameter in a range 0.01 to 2 µm and the porous filter base material (2) and the porous catalyst layer (3) have a porosity of 35 to 50 % as a whole.

3. The oxidation catalyst apparatus for purifying an exhaust gas according to claim 1, wherein the porous catalyst layer (3) has a thickness in a range of 10 to 150 µm.

4. The oxidation catalyst apparatus for purifying an exhaust gas according to claim 3, wherein the porous catalyst layer (3) has a thickness in a range of 50 to 60 µm.

5. The oxidation catalyst apparatus for purifying an exhaust gas according to claim 1, wherein the porous catalyst layer (3) is supported only on the surface on the inflow cell (4) side of the cell partition wall (6).

6. The oxidation catalyst apparatus for purifying an exhaust gas according to claim 1, wherein the porous filter base material (2) has pores having a diameter in a range of 1.0 to 200 µm and the porosity is in a range of 35 to 50 % as a whole.

7. The oxidation catalyst apparatus for purifying an exhaust gas according to claim 1, wherein the porous filter base material (2) is either a SiC porous body or a Si-SiC porous body.

## Patentansprüche

1. Oxidationskatalysatorvorrichtung zum Reinigen von Abgas durch Oxidieren von Schwebstoffen in dem Abgas eines Verbrennungsmotors unter Verwendung eines Katalysators, der ein Komposit-Metalloxid umfasst, wobei die Vorrichtung umfasst
ein poröses Filterbasismaterial (2) mit einer Vielzahl an durchdringenden Löchern, die **dadurch** in einer Achsenrichtung gebildet sind, wobei das poröse Filterbasismaterial (2) eine Wandstromstruktur aufweist, die eine Vielzahl an Einflußzellen (4), in denen Abgas-Einflußteile (4a) der durchdringenden Löcher geöffnet werden, wohingegen die Abgas-Ausflußteile (4b) der durchdringenden Löcher geschlossen werden und eine Vielzahl an Ausflußzellen (5), in denen Abgas-Einflußteile (5a) der durchdringenden Löcher geschlossen werden, wohingegen Abgas-Ausflußteile (5b) der durchdringenden Löcher geöffnet werden, einschließt, und wobei die Einflußzellen (4) und die Ausflußzellen (5) abwechselnd angeordnet sind, um Grenzteilen der jeweiligen Zellen zu ermöglichen Zelltrennwände (6) zu sein; und
eine poröse Katalysatorschicht (3),
**dadurch gekennzeichnet, dass**
die poröse Katalysatorschicht (3) ein poröses Komposit-Metalloxid umfasst, das durch die allgemeine Formel Y₁₋ₓAgₓMn_{1-y}Ru_{y}O₃ dargestellt ist, wobei 0,01 ≤ x ≤ 0,15 und 0,005 ≤ y ≤ 0,2, die auf einer Oberfläche auf mindestens der Einflußzellen-(4)-Seite der Zelltrennwand (6) getragen wird und
die poröse Katalysatorschicht (3) feine Poren aufweist, die einen Durchmesser im Bereich von 0,01 bis 5 µm aufweisen und
das poröse Filterbasismaterial (2) und die poröse Katalysatorschicht (3) eine Porosität von 35 bis 70 % als Ganzes aufweisen.

2. Oxidationskatalysatorvorrichtung zum Reinigen von Abgas nach Anspruch 1, wobei die poröse Katalysatorschicht (3) feine Poren aufweist, die einen Durchmesser im Bereich von 0,01 bis 2 µm aufweisen und das poröse Filterbasismaterial (2) und die poröse Katalysatorschicht (3) eine Porosität von 35 bis 50 % als Ganzes aufweisen.

3. Oxidationskatalysatorvorrichtung zum Reinigen von Abgas nach Anspruch 1, wobei die poröse Katalysatorschicht (3) eine Dicke im Bereich von 10 bis 150 µm aufweist.

4. Oxidationskatalysatorvorrichtung zum Reinigen von Abgas nach Anspruch 3, wobei die poröse Katalysatorschicht (3) eine Dicke im Bereich von 50 bis 60 µm aufweist.

5. Oxidationskatalysatorvorrichtung zum Reinigen von Abgas nach Anspruch 1, wobei die poröse Katalysatorschicht (3) nur auf der Oberfläche auf der Einflußzellen-(4)-Seite der Zelltrennwand (6) getragen wird.

6. Oxidationskatalysatorvorrichtung zum Reinigen von Abgas nach Anspruch 1, wobei das poröse Filterbasismaterial (2) Poren aufweist, die einen Durchmesser im Bereich von 1,0 bis 200 µm aufweisen und die Porosität im Bereich von 35 bis 50 % als Ganzes ist.

7. Oxidationskatalysatorvorrichtung zum Reinigen von Abgas nach Anspruch 1, wobei das poröse Filterbasismaterial (2) entweder ein poröser SiC-Körper oder ein poröser Si-SiC-Körper ist.

## Revendications

1. Dispositif catalytique d'oxydation pour la purification d'un gaz d'échappement par oxydation d'une matière particulaire du gaz d'échappement d'un moteur à combustion interne en utilisant un catalyseur comprenant un oxyde de métal composite, le dispositif comprenant
un matériau de base de type filtre poreux (2) ayant une pluralité de trous de pénétration formés dans celui-ci selon une direction axiale, le matériau de base de type filtre poreux (2) ayant une structure de type « wall-flow » (par écoulement à travers la paroi) incluant une pluralité de cellules d'entrée (4) dans lesquelles les parties d'entrée du gaz d'échappement (4a) des trous de pénétration sont ouvertes alors que les parties de sortie du gaz d'échappement (4b) des trous de pénétration sont fermées et une pluralité de cellules de sortie (5) dans lesquelles les parties d'entrée du gaz d'échappement (5a) des trous de pénétration sont fermées alors que les parties de sortie du gaz d'échappement (5b) des trous de pénétration sont ouvertes, et les cellules d'entrée (4) et les cellules de sortie (5) sont disposées de manière alternée pour que les parties frontières des cellules respectives soient des parois de séparation des cellules (6) ; et
une couche catalytique poreuse (3)
**caractérisé en ce que**
la couche catalytique poreuse (3) comprend un oxyde de métal composite poreux représenté par la formule générale Y₁₋ₓAgₓMn_{1-y}Ru_{y}O₃ dans laquelle 0,01 ≤ x ≤ 0,15 et 0,005 ≤ y ≤ 0,2, supporté sur une surface sur au moins le côté des cellules d'entrée (4) de la paroi de séparation des cellules (6), et
la couche catalytique poreuse (3) présente des pores fins ayant un diamètre compris dans la plage allant de 0,01 à 5 µm, et
le matériau de base de type filtre poreux (2) et la couche catalytique poreuse (3) ont ensemble une porosité de 35 à 70 % dans son ensemble.

2. Dispositif catalytique d'oxydation pour la purification d'un gaz d'échappement selon la revendication 1, dans lequel la couche catalytique poreuse (3) présente des pores fins ayant un diamètre compris dans la plage allant de 0,01 à 2 µm, et le matériau de base de type filtre poreux (2) et la couche catalytique poreuse (3) ont ensemble une porosité de 35 à 50 % dans son ensemble.

3. Dispositif catalytique d'oxydation pour la purification d'un gaz d'échappement selon la revendication 1, dans lequel la couche catalytique poreuse (3) a une épaisseur comprise dans la plage allant de 10 à 150 µm.

4. Dispositif catalytique d'oxydation pour la purification d'un gaz d'échappement selon la revendication 3, dans lequel la couche catalytique poreuse (3) a une épaisseur comprise dans la plage allant de 50 à 60 µm.

5. Dispositif catalytique d'oxydation pour la purification d'un gaz d'échappement selon la revendication 1, dans lequel la couche catalytique poreuse (3) est supportée uniquement sur la surface sur le côté des cellules d'entrée (4) de la paroi de séparation des cellules (6).

6. Dispositif catalytique d'oxydation pour la purification d'un gaz d'échappement selon la revendication 1, dans lequel le matériau de base de type filtre poreux (2) présente des pores ayant un diamètre compris dans la plage allant de 1,0 à 200 µm et la porosité est comprise dans la plage allant de 35 à 50 % dans son ensemble.

7. Dispositif catalytique d'oxydation pour la purification d'un gaz d'échappement selon la revendication 1, dans lequel le matériau de base de type filtre poreux (2) est un corps poreux en SiC ou un corps poreux en Si-SiC.
